# EUROPEAN PATENT SPECIFICATION

(11) **EP 1 456 281 B1**
(45) Date of publication and mention of the grant of the patent: **09.11.2005**
(21) Application number: 02791786.3
(22) Date of filing: 05.12.2002
(51) Int. Cl.: C08J 3/14, C08J 11/08

(54) **PROCESS FOR RECOVERING A POLYMER FROM A SOLUTION**
VERFAHREN ZUR WIEDERGEWINNUNG EINES POLYMEREN AUS EINER LÖSUNG
PROCEDE DE RECUPERATION D'UN POLYMERE A PARTIR D'UNE SOLUTION

(30) Priority: 11.12.2001 FR 0116070
(43) Date of publication of application: 15.09.2004
(73) Proprietor: SOLVAY (Société Anonyme), 1050 Bruxelles (BE)
(72) Inventor: VANDENHENDE, Bernard, B-2811 LEEST (BE); VAN LOOCK, François, B-1830 MACHELEN (BE)
(74) Representative: Jacques, Philippe
(86) International application number: PCT/EP2002/013875
(87) International publication number: WO 2003/054064

(56) References cited:
- WO-A-01/70865
- FR-A- 2 122 195
- GB-A- 1 525 864
- US-A- 5 147 895
- US-A- 5 618 902

## Description

The present invention relates to a process for recovering a polymer in solution.

Polymers are abundantly used in various forms, mainly in solid form. However, it often occurs that, at a given moment in their existence, they are in solution in a solvent from which they then need to be extracted. Thus, the obstacle of polymer solutions is encountered at the end of certain ("solution") polymerization processes, during certain recycling processes, during the cleaning of certain plants for manufacturing polymer-based articles or paints, etc. The recovery of the polymer in solid form from a solution generally involves at least one step of evaporation of the solvent. However, this operation is often expensive on account of its energy consumption, and it does not necessarily lead to polymer particles of adequate particle size. In addition, these polymer particles often have an appreciable residual solvent content.

Patent application WO 01/070865 to the inventor describes a method for recycling a plastic material such as PVC or PVDC using a solvent and a non solvent. This process uses azeotropic distillation for recovering the polymer in solid form, and not an atomization step or a gas that vaporises the solvent.

Patent application JP 11/012 390 describes a process for recovering a polymer in solution, according to which the said solution is atomized and placed in contact with water vapour to evaporate the solvent residues. However, it has been found that this process is applicable only to dilute polymer solutions, since solutions that are too concentrated are too viscous to form droplets by atomization. Similarly, this process does not allow uniform particles to be obtained when the polymer solution is polluted with heavy products such as certain liquids used during the cleaning of certain plants for manufacturing polymer-based articles or paints.

One object of the present invention is consequently to provide a process for recovering a polymer in solution, which makes it possible to process concentrated polymer solutions and/or polymer solutions that are polluted with heavy liquids forming a homogeneous medium therewith, and to provide a resulting product of favourable particle size and with a low residual solvent content.

The present invention consequently relates to a process for recovering a polymer in solution in a solvent, possibly in the presence of at least one heavy liquid, the whole forming a homogeneous medium, according to which:
(a) a non-solvent is added to the homogeneous medium so as to make it heterogeneous,
(b) the heterogeneous medium is converted into droplets by atomization,
(c) the droplets are placed in contact with a gas that vaporizes the solvent and entrains the heavy liquid,
(d) the polymer is recovered in the form of particles.

The polymer whose recovery is targeted by the process according to the present invention may be of any nature. It may be a thermoplastic resin or an elastomer, but in any case is a resin that may be dissolved in a solvent and that therefore is little or not crosslinked. It may be an unused (or virgin) resin, which has not undergone any melt-forming except for possible granulation, or a used resin (production waste or recycled resin). It may be an apolar polymer, such as an ethylene polymer (PE) or a propylene polymer (PP). It may also be a polar polymer such as a vinyl chloride polymer (PVC), a vinylidene chloride polymer (PVDC), a vinylidene fluoride polymer (PVDF); an EVOH polymer (copolymer of ethylene and of vinyl alcohol), etc. It may also be a mixture of at least two such polymers of the same nature or of different nature. Good results have been obtained with PVC (homopolymer or copolymer containing at least 50% by weight of vinyl chloride), PVDF (either vinylidene fluoride homopolymers or copolymers of vinylidene fluoride containing less than 50% by weight of monomer units such as vinyl fluoride, trifluoroethylene, chlorotrifluoroethylene, tetrafluoroethylene, hexafluoropropylene, ethylene, etc.) and PVDC.

The process according to the present invention applies to polymers in solution in a solvent. Thus, if it is desired to apply it to the recovery of solid articles or suspensions of polymer (for example in heavy liquids), these articles or particles in suspension should first be dissolved using a solvent whose nature is adapted to that of the polymer to be dissolved and which forms a homogeneous medium with the possible heavy liquids.

The solvent in which the polymer is dissolved is generally a liquid having a solubility parameter (a definition of and experimental values for which are given in "Properties of Polymers", D.W. Van Krevelen, 1990 edition, pp. 200-202, and also in "Polymer Handbook", J. Brandrup and E.H. Immergut, Editors, Second Edition, p. IV-337 to IV-359) close to the solubility parameter of the polymer. It is understood that the term "solvent" means either a pure substance or a mixture of substances. When the polymer is PVC, a suitable solvent is MEK (methyl ethyl ketone) and in particular an MEK-hexane mixture optionally containing water. When the polymer is EVOH, a mixture of water and alcohol (ethanol, methanol, propanol, etc.) is more suitable, and in the case of LDPE, hexane or cyclohexane is preferred. When the polymer is PVDF or PVDC, cyclohexanone is suitable for use.

The solutions that may be processed by the process according to the present invention have a concentration (of polymer and of heavy liquids) such that their viscosity does not disrupt the correct running of the process.

In a first preferred variant, the process according to the present invention is applied to a polymer solution free of heavy liquids. In this case, adding the non-solvent to the medium generally brings about the precipitation of the polymer and the heterogeneous medium to be atomized consists essentially of a suspension of polymer in a liquid consisting of the solvent and the non-solvent and of possible additives present in the polymer before its dissolution. Working in this way makes it possible to increase the polymer concentration of the solutions to be processed, while having little or no effect on the viscosity of the heterogeneous medium to be atomized. Thus, good results have been obtained with a PVC content of more than 150 g per litre of solvent, and even more than 200 g/l in the case of a rigid PVC, or even 300 g/l in the case of a plasticized PVC. Such solutions generally have a viscosity of about from 50 to 1 000 mPa.s or even more at temperatures in the region of 50°C, and they should consequently be brought to a higher temperature (100 or even 200°C) in order to be able to atomize them, which is economically detrimental and may be harmful to the quality of the polymer. Adding a non-solvent makes it possible to reduce this viscosity to a value of less than or equal to 20 mPa.s, preferably to 10 mPa.s, or even to 2 mPa.s, and thus to atomize it at a lower temperature.

The amount of non-solvent to be added according to this variant of the invention must be sufficient to bring about the precipitation of the polymer. It thus depends on the nature of the polymer, of the solvent and of the non-solvent, and also on the temperature and pressure conditions. When the polymer is PVC and the solvent is MEK, good results have been obtained at a temperature of between 60 and 100°C and at a pressure ranging from atmospheric pressure to 2.2 bar, with solutions containing 300 g of PVC per litre of MEK to which has been added 120 g of water per litre of solution.

In the process according to this variant of the present invention, the precipitation of the solution may be facilitated by reducing the pressure relative to the pressure used during the dissolution, which generally brings about a reduction in temperature. Temperature-sensitive polymers (such as EVOH or PVB, for example) are preferably precipitated under reduced pressure and temperature. In any case, the precipitation is advantageously performed by adding the non-solvent in an amount that is just sufficient to bring about the total precipitation of the dissolved polymer at the given pressure. In a particularly preferred manner, the precipitation is performed by the combined injection of non-solvent in liquid form and in gaseous form, which accelerates the precipitation of the polymer. It may prove to be advantageous for the non-solvent injected optionally to contain a small concentration of solvent; this is advantageous since, as outlined hereinbelow, a possible subsequent step of the process can specifically provide such a source of non-solvent, which may thus be reused without any particular purification. A non-solvent that is suitable for use is water. Water in particular gives good results when the polymer to be recovered is PVC. When the polymer to be recovered is PVDF or PVDC, a non-solvent that is suitable for use is methanol.

The process according to this variant of the invention has been successfully applied to the recovery of PVC in solution in MEK or in an MEK/hexane mixture, and using water as non-solvent.

One means for reducing the particle size of the polymer is to add the non-solvent gradually to the solvent containing the dissolved polymer and to apply a large shear rate to the mixture.

In a second preferred variant, the process according to the present invention is applied to a polymer solution also comprising at least one heavy liquid that is a non-solvent for the polymer but that is compatible with the solvent so as to form a homogeneous medium. According to this variant of the invention, the expression "heavy liquid" is intended to denote a liquid with a boiling point higher than that of the solvent and of the non-solvent. An example of a heavy liquid is white spirit, a cleaning agent used in many fields and in particular in the field of polymer-based paints and coatings.

In this variant, adding a non-solvent to the starting homogeneous medium makes it possible to obtain a heterogeneous medium consisting essentially of an emulsion of the non-solvent in a homogeneous liquid medium consisting of the solvent, the heavy liquid and the dissolved polymer. This emulsion is then readily converted into spherical particles by atomization, whereas direct atomization of the starting homogeneous medium would have led to the formation of non-uniform filaments.

The amount of non-solvent to be added according to this variant of the invention must be sufficient to bring about the formation of an emulsion and adequate stirring means are advantageously provided to ensure the stability of this emulsion. The presence of this emulsion allows the atomization of viscous solutions, the viscosity of which also depends on the pressure and temperature conditions and also on the nature of the ingredients of the medium, namely: the polymer, the heavy liquid, the solvent and the non-solvent. Thus, when the polymer is PVC (and preferably plasticized PVC), the heavy liquid is white spirit, the solvent is MEK and the non-solvent is water, good results have been obtained with solutions comprising 100 g/l of a "slurry" comprising 50% by weight approximately of PVC plasticized with DOP (dioctyl phthalate) and 50% by weight of white spirit, to which have been added 100 g/l of water.

According to this variant of the invention, the non-solvent may also contain small amounts of another compound, such as solvent, for example.

In certain cases, the liquid medium in homogeneous or heterogeneous form may be freed of one or more of its constituents before heterogenization and/or atomization, and this may be performed by any suitable means. Thus, for example, the component(s) with a low boiling point may be removed by simple evaporation.

It should be noted, as briefly mentioned above, that the heterogeneous medium may contain additives initially present in the polymer solution (for example pigments, plasticizers, stabilizers, fillers, etc., present in the polymer before its dissolution).

The atomization included in the process according to the present invention is performed using any known device, such as a high-pressure nozzle (converting pressure into kinetic energy, the product to be atomized being converted into an unstable film that explodes into fine droplets), by a rotary atomizer (the centrifugal force of a motorized plate creating an unstable film that explodes into fine droplets), by a twin-flow atomizer, by sonication, etc. During the atomization, it is important to control the viscosity of the starting heterogeneous medium in order to obtain particles of substantially spherical shape, since a viscosity that is too high leads to the formation of filaments.

In the process according to the present invention, the gas that vaporizes the solvent is advantageously chosen from air, neutral gases and water vapour. For reasons of safety and in order to limit the oxidation of the liquid medium and of the polymer, a gas that produces little or no oxidation will advantageously be chosen, such as water vapour or a neutral gas such as nitrogen. Water vapour is particularly suitable for use since, besides its direct calorific supply, its heat of condensation contributes towards very rapid and particularly effective evaporation of the liquid medium present in the droplets. It should be noted that this gas can entrain, by stripping, other possible liquid constituents of the heterogeneous medium (for example the heavy liquid, in the case of the second preferred variant of the present invention).

Before placing the atomized heterogeneous medium in contact with the evaporation gas, it should be confirmed that the formation of the droplets is indeed complete. This problem is particularly critical when the heterogeneous medium and the gas travel co-currentwise and is less pronounced in the case of a counter-current process. Care will be taken optionally to protect the droplets in formation against the gaseous stream, using a suitable device.

The polymer particles recovered at the atomizer outlet (by any known means, but generally by simple collection in an appropriate collector) may be subjected to desorption and/or drying, and this may take place in particular when the evaporation gas is water vapour. When the atomized droplets and the gas progress co-currentwise, it is particularly advantageous to subject the polymer particles to contact with a gas, preferably in a counter-current device or by transportation on a perforated belt through which the gas passes.

A major advantage of the process according to the present invention is that it can function in a closed loop, without generating emissions. Thus, the vapours collected after the evaporation and/or the entrainment by means of the gas may be condensed and optionally purified by adequate processes (decantation, optionally in the presence of a phase-separating agent; distillation, etc.).

The process according to the present invention may be incorporated into any process involving the recovery of a polymer from a solution. In particular, it can form part of a polymer recycling process.

Thus, according to one preferred variant, the process according to the present invention is applied to a polymer solution obtained by shredding polymer-based articles into fragments with an average size from 1 cm to 50 cm in the event that they exceed these dimensions, and by placing the article fragments in contact with a solvent capable of dissolving the polymer. Preferably, in this process, the polymer is PVC, the solvent is an MEK-hexane mixture optionally containing water, and the non-solvent used to precipitate the polymer is water, as described in patent application EP 945 481 in the name of Solvay.

According to another variant also mentioned in the abovementioned patent application, the process according to the present invention is applied to a polymer solution obtained by placing a plastisol slurry (suspension of PVC particles in a plasticizer, diluted with a cleaning liquid such as white spirit) in contact with MEK in an amount sufficient to dissolve the PVC and ensure the formation of a homogeneous liquid medium.

The process according to these two variants of the present invention makes it possible to obtain a very porous powder formed from substantially spherical recycled polymer particles. These particles generally have a mean diameter of less than 100 µm and preferably less than or equal to 50 µm. However, it is rare for the mean diameter of these particles to be less than 1 µm, or even 5 µm.

Such particles may be used in unmodified form in certain applications such as rotary moulding or slush moulding, or may be introduced in unmodified form into a plastisol intended to be coated and gelled. Alternatively, these particles may be granulated in an extruder or, more advantageously, sintered so as to avoid thermal ageing of the polymer.

The present invention is illustrated in a non-limiting manner by the examples that follow.

### Example 1

A solution containing 18% by weight of rigid PVC obtained from industrial wastes of window sash frames in solution (at 100°C) in a mixture of 82% MEK/13% hexane/5% water (mass proportions) was first freed of the hexane. Water was then gradually injected therein (0 to 12% by weight relative to the mass of solvent) at 55°C and with stirring (with an intensity adapted to obtain a homogeneous suspension). The heterogeneous medium obtained was then subjected to atomization and the solvent it contains was vaporized by feeding it into a hollow-cone nozzle fed, under 50 to 70 bar, with water vapour (at 100°C and atmospheric pressure) circulating co-currentwise. A powder with a mean diameter of 31 µm (with 10% of the particles less than 9 µm in diameter and 90% of the particles less than 60 µm in diameter) was obtained.

### Example 2

A solution containing 28% by weight of plasticized PVC (comprising about 45% PVC, 30% fillers and 25% plasticizers) in solution in a mixture of 82% MEK/13% hexane/5% water (mass proportions) was first freed of the hexane. Water was then gradually injected therein (10 to 12% by weight relative to the mass of solvent) at 55°C and with stirring (with an intensity adapted to obtain a homogeneous suspension). The heterogeneous medium obtained was then subjected to atomization and the solvent it contains was vaporized by feeding it into a hollow-cone nozzle fed, under 50 to 100 bar, with water vapour (at 100°C and atmospheric pressure) circulating co-currentwise. A powder with a particle size of 1 to 100 µm and a very high porosity was obtained.

### Example 3

A solution containing 10% slurry (derived from a coating line and consisting of 50% plastisol and 50% white spirit) and 90% MEK (mass proportions) was prepared and filtered. 10% of water was added thereto at 50°C in order to produce a stable emulsion. These operations were all performed at 50°C and with stirring (with an intensity adapted to obtain a homogeneous emulsion). The emulsion obtained was then atomized at atmospheric pressure in a hollow-cone nozzle into which was injected water vapour co-currentwise. A powder with substantially spherical grains having a particle size of 1 to 100 µm was collected at the bottom of the apparatus, while the solvent was evaporated off, and the cleaning agent entrained by the water vapour was collected in the top of the apparatus. The same test was repeated without adding the 10% of water for allowing a stable emulsion to be formed; it was not possible to obtain a powder of substantially spherical grains, but only non-uniform filaments.

### Example 4

100 g of PVDC were dissolved at 120°C in 1 1 of cyclohexanone at 100°C. 3 000 g of methanol were added thereto at 50°C and with stirring (with an intensity adapted to obtain a homogeneous suspension). The suspension obtained was atomized in a hollow-cone nozzle working at a pressure of about 80 bar and fed with water vapour counter-currentwise. The PVDC powder obtained has a mean particle diameter of about 100 µm.

### Example 5

50 g of PVDF were dissolved at 120°C in 1 1 of cyclohexanone at 100°C. 2 000 g of methanol were added thereto at 50°C and with stirring (with an intensity adapted to obtain a homogeneous suspension). The suspension obtained was atomized in a hollow-cone nozzle working at a pressure of about 80 bar and fed with water vapour counter-currentwise. The PVDF powder obtained has a mean particle diameter of less than 100 µm.

## Claims

1. Process for recovering a polymer in solution in a solvent, the whole forming a homogeneous medium, according to which:
(a) a non-solvent is added to the homogeneous medium so as to make it heterogeneous,
(b) the heterogeneous medium is converted into droplets by atomization,
(c) the droplets are placed in contact with a gas that vaporizes the solvent,
(d) the polymer is recovered in the form of particles.

2. Process according to Claim 1, in which the heterogeneous medium consists essentially of a suspension of polymer in a liquid consisting of the solvent, the non-solvent and the possible additives present in the polymer before its dissolution.

3. Process according to Claim 1, in which the heterogeneous medium consists essentially of an emulsion of the non-solvent in a homogeneous liquid medium consisting of the solvent, the dissolved polymer, the possible additives present in the polymer before its dissolution, and a heavy liquid.

4. Process according to the preceding claim, in which the heavy liquid is white spirit.

5. Process according to any one of the preceding claims, in which the polymer is PVC.

6. Process according to the preceding claim, in which the solvent is MEK or an MEK/hexane mixture optionally containing water.

7. Process according to any one of the preceding claims, in which the gas that vaporizes the solvent is of the same nature as the non-solvent.

8. Process according to any one of the preceding claims, in which the gas that vaporizes the solvent is water vapour.

9. Process according to any one of the preceding claims, in which the polymer particles recovered are subjected to desorption and/or drying.

## Patentansprüche

1. Verfahren zum Wiedergewinnen eines in einem Lösungsmittel in Lösung vorliegenden Polymers, wobei das Ganze ein homogenes Medium ausbildet, wonach:
(a) ein Nicht-Lösungsmittel zu dem homogenen Medium zugesetzt wird, um es heterogen zu machen,
(b) das heterogene Medium durch Zerstäubung in Tröpfchen umgewandelt wird,
(c) die Tröpfchen mit einem Gas in Kontakt gebracht werden, das das Lösungsmittel verdampft,
(d) das Polymer in Form von Teilchen wiedergewonnen wird.

2. Verfahren nach Anspruch 1, worin das heterogene Medium im wesentlichen aus einer Suspension von Polymer in einer Flüssigkeit besteht, die aus dem Lösungsmittel, dem Nicht-Lösungsmittel und den in dem Polymer vor dessen Auflösung gegebenenfalls vorliegenden Additiven besteht.

3. Verfahren nach Anspruch 1, worin das heterogene Medium im wesentlichen aus einer Emulsion des Nicht-Lösungsmittels in einem homogenen flüssigen Medium besteht, das aus dem Lösungsmittel, dem aufgelösten Polymer, den in dem Polymer vor dessen Auflösung gegebenenfalls vorliegenden Additiven und aus einer schweren Flüssigkeit besteht.

4. Verfahren nach dem vorstehenden Anspruch, worin die schwere Flüssigkeit White Spirit ist.

5. Verfahren nach einem der vorstehenden Ansprüche, worin das Polymer PVC ist.

6. Verfahren nach dem vorstehenden Anspruch, worin das Lösungsmittel MEK oder ein gegebenenfalls Wasser enthaltendes MEK/Hexangemisch ist.

7. Verfahren nach einem der vorstehenden Ansprüche, worin das das Lösungsmittel verdampfende Gas von der gleichen Natur wie das Nicht-Lösungsmittel ist.

8. Verfahren nach einem der vorstehenden Ansprüche, worin das das Lösungsmittel verdampfende Gas Wasserdampf ist.

9. Verfahren nach einem der vorstehenden Ansprüche, worin die wiedergewonnenen Polymerteilchen einer Desorption und/oder einem Trocknen unterzogen werden.

## Revendications

1. Procédé de récupération d'un polymère en solution dans un solvant, l'ensemble formant un milieu homogène, selon lequel:
(a) on ajoute un non solvant au milieu homogène de manière à le rendre hétérogène;
(b) on transforme le milieu hétérogène en des gouttelettes par atomisation;
(c) on met les gouttelettes en contact avec un gaz qui vaporise le solvant;
(d) on récupère le polymère sous forme de particules.

2. Procédé selon la revendication 1, dans lequel le milieu hétérogène est essentiellement constitué d'une suspension de polymère dans un liquide constitué du solvant, du non solvant et des éventuels additifs présents dans le polymère avant sa dissolution.

3. Procédé selon la revendication 1, dans lequel le milieu hétérogène est essentiellement constitué d'une émulsion du non solvant dans un milieu liquide homogène constitué du solvant, du polymère dissout, des éventuels additifs présents dans le polymère avant sa dissolution et d'un liquide lourd.

4. Procédé selon la revendication précédente, dans lequel le liquide lourd est du white spirit.

5. Procédé selon l'une quelconque des revendications précédentes, dans lequel le polymère est le PVC.

6. Procédé selon la revendication précédente, dans lequel le solvant est la MEK ou un mélange MEK- hexane contenant éventuellement dé l'eau.

7. Procédé selon l'une quelconque des revendications précédentes, dans lequel le gaz qui vaporise le solvant est de la même nature que le non solvant.

8. Procédé selon l'une quelconque des revendications précédentes, dans lequel le gaz qui vaporise le solvant est de la vapeur d'eau.

9. Procédé selon l'une quelconque des revendications précédentes, dans lequel les particules de polymère récupérées sont soumises à une désorption et/ou à un séchage.
